# EUROPÄISCHE PATENTSCHRIFT

(11) **EP 0 595 315 B1**
(45) Veröffentlichungstag und Bekanntmachung des Hinweises auf die Patenterteilung: **02.05.1997**
(21) Anmeldenummer: 93117484.1
(22) Anmeldetag: 28.10.1993
(51) Int. Cl.: F41G 1/38, G02B 27/34

(54) **Zielfernrohr mit beleuchtender Zieleinrichtung**
Device for illuminating the reticle of a telescopic sight
Dispositif pour illuminer le réticule d'une lunette de visée

(30) Priorität: 28.10.1992 DE 9214584 U
(43) Veröffentlichungstag der Anmeldung: 04.05.1994
(73) Patentinhaber: SWAROVSKI OPTIK KG, 6060 Hall i. Tirol (AT)
(72) Erfinder: Schieferstein, Irmtraud, AT-6330 Wetzlar-Naunheim (AT); Pernstich, Ludwig Dipl.-Ing., AT-6064 Rum (AT)
(74) Vertreter: Kador & Partner

(56) Entgegenhaltungen:
- WO-A-84/02574
- DE-A- 1 915 207
- DE-C- 178 914
- US-A- 4 554 744
- US-A- 4 859 058

## Beschreibung

Bei Jagdwaffen werden Zielfernrohre verwendet, die mit verschieden gestalteten Absehen ausgerüstet sind. Beim Jagen in der Morgen- oder Abenddämmerung ist oft das Absehen auf dem dunklen Wildkörper nicht zu erkennen.

Es sind bereits Lösungen vorgeschlagen worden, um das Absehen zu beleuchten. Zu diesem Zweck wird in einem zusätzlichen Gehäuse am Zielfernrohr eine Beleuchtung vorgesehen. Eine solche Lösung ist beispielsweise in der Deutschen Patentschrift 178914 beschrieben. Eine andere Lösung zeigt die Deutsche Offenlegungsschrift 1 915 207, bei der die Beleuchtung unter dem Zielfernrohr angebracht ist. Die bekannten Lösungen sind bedienungsunfreundlich, erfordern besondere Zielrohrgehäuse-Ausgestaltungen und sind zum Nachrüsten von Zielfernrohren ohne Beleuchtungseinrichtung nicht geeignet.

Aufgabe der Erfindung ist es, Zielfernrohre mit beleuchtender Zieleinrichtung zu schaffen, die sich durch einfachen Aufbau, Bedienungsfreundlichkeit und Nachrüstbarkeit auszeichnen.

Der Erfindung liegt die Erkenntnis zugrunde, daß diese Aufgabe dadurch gelöst werden kann, daß eine Beleuchtungseinrichtung teilweise in die Höhenverstellung bzw. Seitenverstellung integriert wird.

Gegenstand der Erfindung ist ein Zielfernrohr mit einer Einrichtung zur Beleuchtung der Zieleinrichtung, das dadurch gekennzeichnet ist, daß eine Beleuchtungseinrichtung zumindest teilweise in der Höhenverstellung oder der Seitenverstellung des Zielfernrohres angeordnet ist.

Durch die erfindungsgemäße Lösung wird erreicht, daß zusätzliche Gehäuseteile nicht erforderlich sind, und insbesondere auch, daß handelsübliche Zielfernrohre ohne Beleuchtungseinrichtung mit einer solchen nachgerüstet werden können.

Vorzugsweise soll die Beleuchtungseinrichtung ein- bzw. ausbringbar angeordnet sein. Die Beleuchtungseinrichtung kann dann nur bei Bedarf, beispielsweise Dämmerung, in das Zielfernrohr eingesetzt werden. Dabei kommt es besonders in Betracht, daß die Beleuchtungseinrichtung anstelle der Schutzkappe in die Höhenverstellung oder die Seitenverstellung eingeschraubt wird.

Vorzugsweise umfaßt das Korn eine Glasfaser, die im Zielpunkt des Absehens einen Leuchtpunkt bildet.

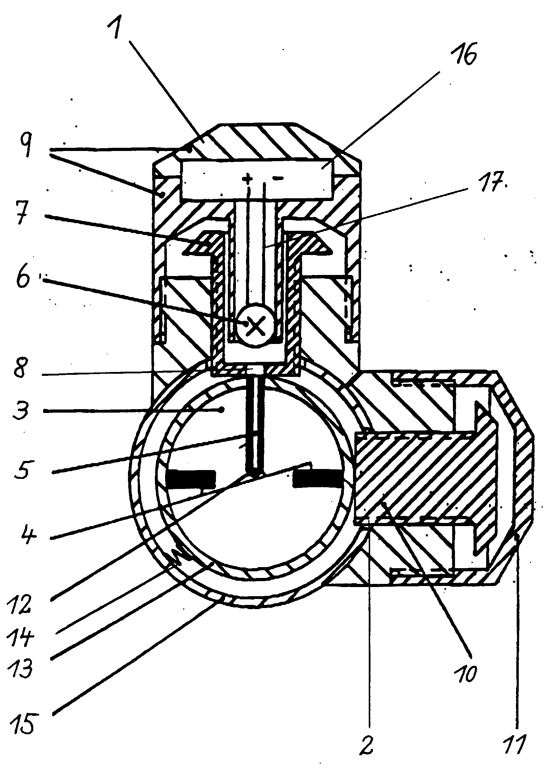

Die Erfindung wird nachstehend anhand der Zeichnung näher erläutert. Die einzige Figur, die eine beispielshafte Ausführungsform zeigt, zeigt einen Schnitt durch ein Zielfernrohr in der Objektiv-Abbildungsebene vom Okular aus gesehen mit den Verstellungen zur Schußkorrektur in beiden Achsen.

Das Zielfernrohr umfaßt ein Außengehäuse 15, in dem ein bewegliches Innengehäuse 13 zur Schußkorrektur angeordnet ist. Das Innengehäuse wird von einer Feder 14 abgestützt und ist durch die Einstellspindel 10 der Seitenverstellung 2 bzw. der Einstellspindel 7 der Höhenverstellung 1 in seiner Lage veränderbar.

Auf der Strichplatte 3 ist das Absehen 4 vorgesehen. Die Zielmarke 5 umfaßt eine Glasfaser, die an der Spitze einen Leuchtpunkt 12 bildet.

Die Seitenverstellung 2 ist in üblicher Art und Weise ausgebildet und umfaßt neben der Einstellspindel 10 die Schutzkappe 11.

In der Höhenverstellung 1 ist jedoch die Beleuchtungseinrichtung 9 vorgesehen. Im Inneren der Einstellspindel 7 befindet sich eine Lampe 6, die über Stromleitungen 17 mit der Energie einer Batterie 16 versorgt wird. Das Licht fällt durch die Öffnung 8 in der Einstellspindel 7 auf die Glasfaser der Zielmarke 5, so daß das Ende der Glasfaser als Leuchtpunkt 12 leuchtet.

Bei der gezeigten bevorzugten Ausführungsform ist ersichtlich, daß die Beleuchtungseinrichtung 9 anstelle einer Schutzkappe, wie die Schutzkappe 11 bei der Seitenverstellung 2, eingesetzt ist.

Auf diese Weise wird erreicht, daß keine zusätzlichen Gehäuseteile notwendig sind, handelsübliche Zielfernrohre mit einer Beleuchtungseinrichtung nachgerüstet werden können und die Beleuchtungseinrichtung je nach Bedarf eingesetzt bzw. herausgenommen werden kann.

Die Mittelachse der Seitenverstellung 2 bzw. Höhenverstellung 1 liegt mit der Abbildungsebene des Objektivs und mit dem Absehen 4 in oder nahezu in einer Ebene.

Das Absehen 4 kann auch in Form einer geätzten Strichplatte vorgesehen sein.

Das Anbringen einer Glasfaser auf der Zielmarke 5 ist jedoch vorteilhaft, weil unbeleuchtet das Absehen nicht verändert wird, aber bei Bedarf ein heller Leuchtpunkt 12 erzielt wird.

Durch die Integration der Beleuchtungseinrichtung 9 in eine der Verstellungen 1, 2 wird ein zusätzlicher Durchbruch ins Zielfernrohr vermieden, was auch in bezug auf Wasserdichtheit von großem Vorteil ist.

Die Beleuchtungseinrichtung kann mit einem Schalter versehen werden, so daß die Beleuchtung ein- und ausgeschaltet werden kann. Es kommt auch in Betracht, die Lichtintensität zu variieren und/oder Licht verschiedener Farben vorzusehen.

Bei der gezeigten Ausführungsform ist die Beleuchtungseinrichtung 9 in der Höhenverstellung 1 angeordnet. Sie kann jedoch auch in der Seitenverstellung 2 vorgesehen sein.

Es kommt ferner in Betracht, die Batterie 16 und auch die Lampe 6 außerhalb der Einstellspindel 7 und auch außerhalb der Höhenverstellung 1 selbst vorzusehen, solange dafür Sorge getragen wird, daß das Licht durch die Höhenverstellung zur Beleuchtung der Zieleinrichtung geführt wird. Dasselbe gilt sinngemäß für die Seitenverstellung.

## Patentansprüche

1. Zielfernrohr mit einer Einrichtung zur Beleuchtung der Zieleinrichtung, **dadurch gekennzeichnet**, daß eine Beleuchtungseinrichtung zumindest teilweise in der Höhenverstellung (1) oder der Seitenverstellung (2) des Zielfernrohres angeordnet ist.

2. Zielfernrohr nach Anspruch 1, dadurch gekennzeichnet, daß die Beleuchtungseinrichtung in der Höhenverstellung (1) oder der Seitenverstellung (2) ein- bzw. ausbringbar angeordnet ist.

3. Zielfernrohr nach Anspruch 1 oder 2, dadurch gekennzeichnet, daß die Beleuchtungseinrichtung anstelle einer Schutzkappe (11) in die Höhenverstellung (1) oder die Seitenverstellung (2) einschraubbar ist.

4. Zielfernrohr nach einem der Ansprüche 1 bis 3, dadurch gekennzeichent, daß die Einstellspindel (7) eine Öffnung (8) zum Durchführen von Licht oder eines Lichtleiters aufweist.

5. Zielfernrohr nach einem der Ansprüche 1 bis 4, dadurch gekennzeichnet, daß die Mittelachse der Verstellung (1, 2) mit der Abbildungsebene des Objektivs und mit dem Absehen (4) in einer Ebene liegt.

6. Zielfernrohr nach einem der Ansprüche 1 bis 5, dadurch gekennzeichnet, daß die Zielmarke (5) eine Glasfaser umfaßt, die im Zielpunkt des Absehens einen Leuchtpunkt (12) bildet.

7. Zielfernrohr nach einem der Ansprüche 1 bis 6, dadurch gekennzeichnet, daß das Absehen (4) in Form einer geätzten Strichplatte vorgesehen ist.

## Claims

1. A telescopic sight with a device for illuminating the aiming device, characterized in that an illuminating device is disposed at least partly in the height adjusting means (1) or the lateral adjusting means (2) of the telescopic sight.

2. The telescopic sight of claim 1, characterized in that the illuminating device is disposed in the height adjusting means (1) or lateral adjusting means (2) so as to be brought in and out.

3. The telescopic sight of claim 1 or 2, characterized in that the illuminating device is adapted to be screwed into the height adjusting means (1) or lateral adjusting means (2) instead of a protective cap (11).

4. The telescopic sight of any of claims 1 to 3, characterized in that the adjusting spindle (7) has an opening (8) for the passage of light or a light guide.

5. The telescopic sight of any of claims 1 to 4, characterized in that the center axis of the adjusting means (1, 2) is located in a plane with the image plane of the objective and with the graticule (4).

6. The telescopic sight of any of claims 1 to 5, characterized in that the reticle (5) includes a glass fiber which forms a luminous spot (12) at the point of aim of the graticule.

7. The telescopic sight of any of claims 1 to 6, characterized in that the graticule (4) is provided in the form of etched cross hairs.

## Revendications

1. Lunette de visée comportant un dispositif pour éclairer le dispositif de visée, caractérisée en ce qu'un dispositif d'éclairement est disposé au moins en partie dans le dispositif de réglage vertical (1) ou dans le dispositif de réglage latéral (2) de la lunette de visée.

2. Lunette de visée selon la revendication 1, caractérisée en ce que le dispositif d'éclairement est disposé de manière à pouvoir être introduit dans le dispositif de réglage vertical (1) ou dans le dispositif de réglage latéral (2) et en être ressorti.

3. Lunette de visée selon la revendication 1 ou 2, caractérisée en ce que le dispositif d'éclairement peut être vissé, à la place d'un capuchon de protection (11), dans le dispositif de réglage vertical (1) ou dans le dispositif de réglage latéral (2).

4. Lunette de visée selon l'une des revendications 1 à 3, caractérisée en ce que la broche de réglage (7) possède une ouverture (8) pour le passage de la lumière ou d'un guide de lumière.

5. Lunette de visée selon l'une des revendications 1 à 4, caractérisée en ce que l'axe médian du dispositif de réglage (1,2) est situé avec le plan image de l'objectif et le cran de mire (4) dans un même plan.

6. Lunette de visée selon l'une des revendications 1 à 5, caractérisée en ce que la marque de visée (5) comprend une fibre de verre, qui forme un point d'éclairement (12) au niveau du point de visée du cran de mire.

7. Lunette de visée selon l'une des revendications 1 à 6, caractérisée en ce que le cran de mire (4) est prévu sous la forme d'un réticule corrodé.
